# EUROPEAN PATENT APPLICATION

(11) **EP 1 553 511 A1**
(43) Date of publication of application: **13.07.2005**
(21) Application number: 03736237.3
(22) Date of filing: 18.06.2003
(51) Int. Cl.: G06F 17/60, G06F 12/00

(54) **NETWORK SERVICE SYSTEM AND POINT COMMUTING SYSTEM**

(30) Priority: 16.07.2002 JP 2002207241
(71) Applicant: Konami Online, Inc., Tokyo 106-6113 (JP)
(72) Inventor: AMEMIYA, Tasuku c/o Konami Online, Inc., Minato-ku, Tokyo 106-6113 (JP); TATSUNO, Yuichi c/o Konami Online, Inc., Minato-ku, Tokyo 106-6113 (JP); OYA, Hideyuki c/o Konami Online, Inc., Minato-ku, Tokyo 106-6113 (JP); IKEDA, Ryo c/o Konami Online, Inc., Minato-ku, Tokyo 106-6113 (JP)
(74) Representative: Winter, Brandl, Fürniss, Hübner, Röss, Kaiser, Polte Partnerschaft Patent- und Rechtsanwaltskanzlei
(86) International application number: PCT/JP2003/007728
(87) International publication number: WO 2004/008358

(57) **Abstract**

A network service system for allowing points related to one service to be transferred to points related to another service is provided. Point information is stored in association with a user ID in databases (18, 20). When a game service is provided to a user, a game server (16) updates the point information stored in the database (20) in association with the user ID for that user to consume the user' s points. A network game system (10) updates the point information stored in the database (20) in association with the user ID of the user in the game server (16) based on the point information stored in the database (18) in association with the user ID of the user in a portal site server (14).

## Description

### TECHNICAL FIELD

The present invention relates to a network service system, a network game system, a point transfer system, a point management device, and a point management method. For example, the present invention relates to a technique for updating point information stored in relation to one service based on point information stored in relation to another service.

### BACKGROUND ART

Services such as merchandise sales and games are provided increasingly through communication networks. Some of these services allow users to accumulate points earned by using the service, and gain various privileges based on the accumulated points.

Conventionally, the points a user has accumulated in one service cannot be used in another service. However, if a system for transferring the points is implemented so that the points accumulated in one service can be used in other services, users will be interested in the "other" services, and the business is expected to grow.

The present invention is conceived in view of the above, and an object thereof is to provide a system allowing points related to one service to be transferred to points related to another service.

Another object of the present invention is to provide a system allowing safe transfer of points related to one service to points related to another service.

### DISCLOSURE OF THE INVENTION

In order to solve the above-described problems, a network service system according to one aspect of the present invention is a network service system for providing a user with first and second services, comprising a first server for providing the first service, a first database connected to the first server for storing point information in association with user identifying information related to the user in the first server, a second server for providing the second service, and a second database connected to the second server for storing point information in association with user identifying information related to the user in the second server, wherein the first server includes point offering means for updating the point information stored in the first database in association with the user identifying information related to the user so as to offer points to the user, the second server includes point consuming means for updating the point information stored in the second database in association with the user identifying information related to the user so as to consume the point of the user when the second service is provided to the user, and the network service system further comprises point transferring means for updating the point information stored in the second database in association with the user identifying information related to the user in the second server based on the point information stored in the first database in association with the user identifying information related to the user in the first server.

According to the present invention, a first service is provided by a first server, and a second service is provided by a second server. These services include a service for allowing a user to play a game or to purchase a product. The user receives the first and second services provided by the first and second servers.

The first server may provide the service to other users, i.e. users who wish to receive only the first service, not the second service. Similarly, the second server may provide the service to other users, i.e. users who wish to receive only the second service, not the first service.

A first database is connected to the first server while a second database is connected to the second server. In the first database, point information is stored in association with user identifying information related to the user in the first server, i.e. the user receiving both of the first and second services. In the second database, point information is stored in association with user identifying information related to the user in the second server, i.e. the user receiving both of the first and second services. The point information is numerical information or the like indicating, for example, the balance of points (including those called by other names such as a "coin" and a "medal").

The first server updates the point information stored in the first database in association with the user identifying information related to the user to give points to the user. When the second service is provided to the user, the second server updates the point information stored in the second database in association with the user identifying information related to the user to consume the points of the user. In response to, for example, a request from the user, or with predetermined timing, this system updates the point information stored in the second database in association with the user identifying information related to the user in the second server based on the point information stored in the first database in association with the user identifying information related to the user in the first server, and transfers the point in the first database to the second database.

Thus, the point related to the first service and stored in the first server can be transferred to the second database related to the second service, thereby stirring up the interest of the user of one service in the other service.

According to one embodiment, the present invention further comprises charge amount calculating means for calculating an amount of money to be paid from a person involved in the first server to a person involved in the second server. This makes it possible for the person involved in the first server to know the amount of money to be paid to the person involved in the second server in compensation for cooperation in business or the like. The person involved includes a server administrator, a service provider, and the like.

In this embodiment, the charge amount calculating means includes means for counting the number of users, and may calculate the amount based on the number of users. The number of users, i.e. the number of users receiving both of the first and second services, is related to the degree of cooperation between the persons involved in the first and second servers, and therefore the amount can be reasonably calculated based thereon. The amount may be calculated based on the content stored in the first database, such as cumulative earned points corresponding to the point information stored in the first database. Alternatively, the amount may be calculated based on the number of times access of a predetermined type (such as a point inquiry request and a point transfer request) is made from the second server to the first server.

According to another embodiment of the present invention, the point transferring means includes secret identification information updating means provided in the first server for updating secret identification information stored in the first database in association with the point information when the point information stored in the first database is updated, point inquiry request receiving means provided in the first server for receiving a point inquiry request from the second server, point information and secret identification information returning means provided in the first server for returning the point information and the secret identification information stored in the first database when the point inquiry request is received by the point inquiry request receiving means, point transfer request receiving means provided in the first server for receiving a point transfer request including secret identification information from the second server, first point transferring means provided in the first server for updating the point information stored in the first database to decrease a point balance and returning point transfer allowance data to the second server when the secret identification information included in the point transfer request received by the point transfer request receiving means matches the secret identification information stored in the first database, and second point transferring means provided in the second server for updating the point information stored in the second database to increase a point balance when the point transfer allowance data is returned by the first point transferring means.

In this embodiment, secret identification information is updated when point information stored in a first database is updated in a first server. As a result, even though the secret identification information is received in response to a point inquiry request and this information included in a point transfer request is returned by the second server to the first server, the secret identification information included in the point transfer request does not match the point information stored in the first database if the point information stored in the first database is updated between the time the first server transmits the secret identification information and the time the point transfer request is received, whereby point transfer allowance data is not returned to the second server. Thus, point transfer is more securely performed in this embodiment.

The point transfer system according to another aspect of the present invention is a point transfer system including first and second databases, each storing point information. The system comprises point information updating means for updating the point information stored in the first database, secret identification information updating means for updating secret identification information stored in the first database in association with the point information when the point information stored in the first database is updated by the point information updating means, point inquiry request receiving means for receiving a point inquiry request, point information and secret identification information returning means for returning the point information and the secret identification information stored in the first database when the point inquiry request is received by the point inquiry request receiving means, point transfer request receiving means for receiving a point transfer request including secret identification information , first point transferring means for updating the point information stored in the first database to decrease a point balance and returning point transfer allowance data when the secret identification information included in the point transfer request received by the point transfer request receiving means matches the secret identification information stored in the first database, and second point transferring means for updating the point information stored in the second database to increase a point balance when the point transfer allowance data is returned by the first point transferring means. Thus, the points can be securely transferred. The secret identification information updating means may update the secret identification information based on, for example, a random number.

The point management device according to a further aspect of the present invention comprises point information updating means for updating point information stored in a database, secret identification information updating means for updating secret identification information stored in the database in association with the point information when the point information stored in the database is updated by the point information updating means, point inquiry request receiving means for receiving a point inquiry request, point information and secret identification information returning means for returning the secret identification information and the point information stored in the database when the point inquiry request is received by the point inquiry request receiving means, point transfer request receiving means for receiving a point transfer request including secret identification information , and point transferring means for updating the point information stored in the database to decrease a point balance and returning point transfer allowance data when the secret identification information included in the point transfer request received by the point transfer request receiving means matches the secret identification information stored in the database.

The point management method according to a further aspect of the present invention comprises a point information updating step for updating point information stored in a database, a secret identification information updating step for updating secret identification information stored in the database in association with the point information when the point information stored in the database is updated at the point information updating step, a point inquiry request receiving step for receiving a point inquiry request, a point information and secret identification information returning step for returning the secret identification information and the point information stored in the database when the point inquiry request is received at the point inquiry request receiving step, a point transfer request receiving step for receiving a point transfer request including secret identification information , and a point transferring step for updating the point information stored in the database to decrease a point balance and returning point transfer allowance data when the secret identification information included in the point transfer request received at the point transfer request receiving step matches the secret identification information stored in the database. Thus, the points can be securely transferred.

The network game system according to a further aspect of the present invention comprises a first game server, a first database connected to the first game server for storing point information related to a game and secret identification information , a second game server, and a second database connected to the second game server for storing point information related to a game, wherein the first game server includes point information updating means for updating the point information stored in the first database, secret identification information updating means for updating the secret identification information stored in the first database in association with the point information when the point information stored in the first database is updated by the point information updating means, point inquiry request receiving means for receiving a point inquiry request from the second game server, point information and secret identification information returning means for returning the secret identification information and the point information stored in the first database when the point inquiry request is received by the point inquiry request receiving means, point transfer request receiving means for receiving a point transfer request including secret identification information from the second game server, and first point transferring means for updating the point information stored in the first database to decrease a point balance and returning point transfer allowance data to the second game server when the secret identification information included in the point transfer request received by the point transfer request receiving means matches the secret identification information stored in the first database, and the second game server includes second point transferring means for updating the point information stored in the second database to increase a point balance when the point transfer allowance data is returned from the second game server by the first point transferring means.

Thus, the points can be securely transferred from the first database to the second database in the network game system.

### BRIEF DESCRIPTION OF THE DRAWINGS

Fig. 1 is a view illustrating an overall configuration of a game system according to one embodiment of the present invention.
Fig. 2 is a view illustrating an example of a service menu screen provided by a portal site server.
Fig. 3 is a view illustrating an example of an ID and password entry screen provided by the portal site server.
Fig. 4 is a view illustrating an example of a service menu screen provided by a game server.
Fig. 5 is a view illustrating an example of a point balance confirmation screen provided by the game server.
Fig. 6 is a view illustrating an example of a transfer complete screen provided by the game server.
Fig. 7 is a view illustrating an example of a transfer failure screen provided by the game server.
Fig. 8 is a view illustrating an example of a transfer point entry screen provided by the game server.
Fig. 9 is a view illustrating an example of a point database included in a database connected to the portal site server.
Fig. 10 is a view illustrating an example of an ID matching table stored in the database connected to the portal site server.
Fig. 11 is a view illustrating an example of the point database included in the database connected to the game server.
Fig. 12 is a view illustrating a configuration of functions of the portal site.
Fig. 13 is a view illustrating a configuration of functions of a game site.
Fig. 14 is a flowchart of a point updating process performed by the portal site server.
Fig. 15 is a flowchart of a point reading process performed by the game site server.
Fig. 16 is a flowchart of a point reading process performed by the portal site server.
Fig. 17 is a flowchart of a point transfer process performed by the game site server.
Fig. 18 is a flowchart of a point transfer process performed by the portal site server.

### BEST MODE FOR CARRYING OUT THE INVENTION

An exemplary embodiment of the present invention will now be described in detail with reference to the accompanying drawings.

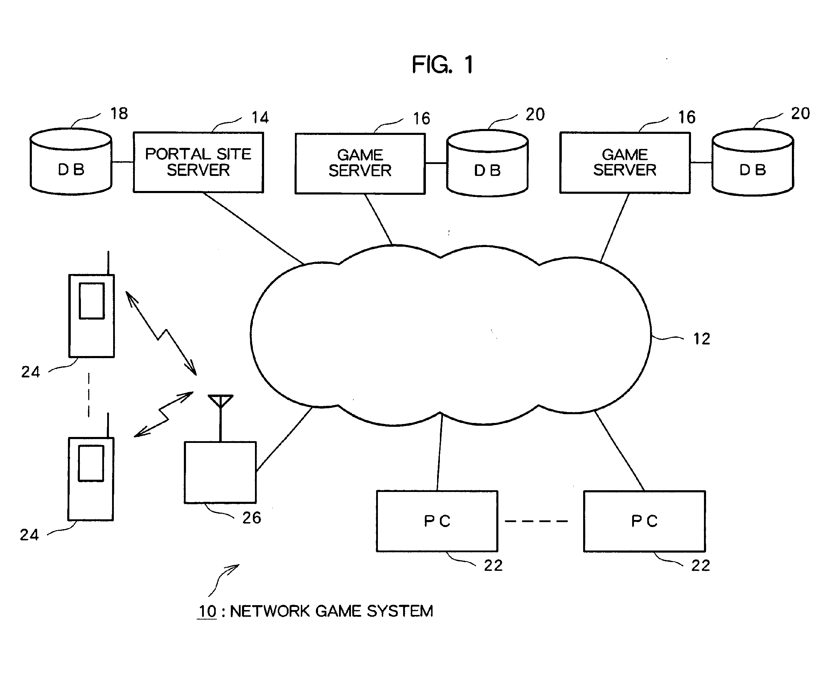

Fig. 1 is a view illustrating an overall configuration of a network game system (network service system) according to an embodiment of the present invention. Referring to Fig. 1, in a network game system 10, a portal site server 14, a game server 16, a personal computer 22, and a mobile phone base station 26 are directly or indirectly connected to a data communication network 12 such as the Internet.

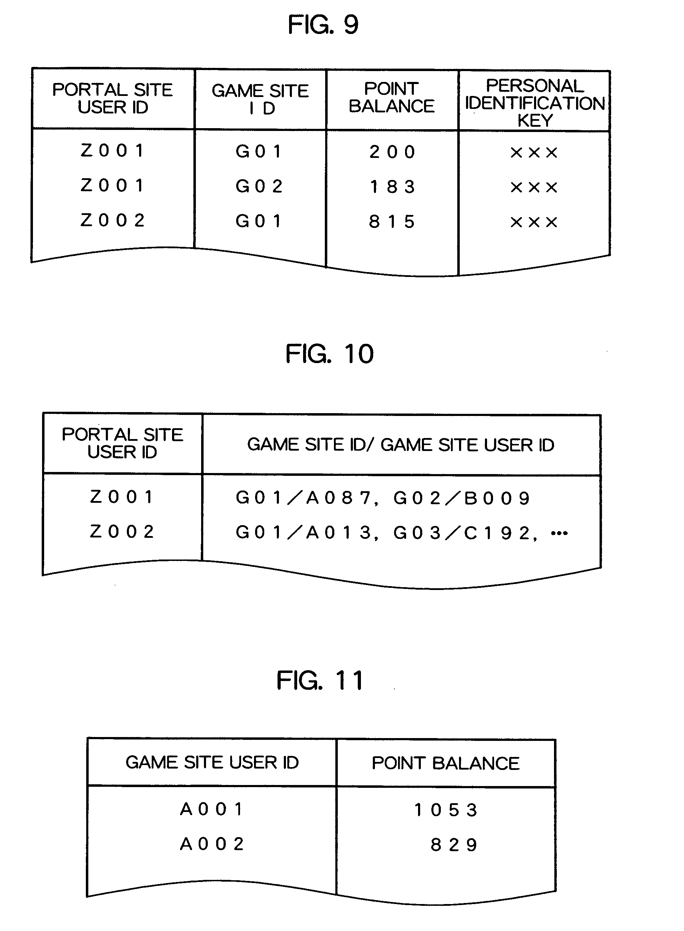

The portal site server 14 includes a known server computer system, and provides a mobile phone 24 and the personal computer 22 with games and other network services. The portal site server 14 is connected to a database 18 formed by a known hard disk memory device, and a point database (see Fig. 9) and an ID matching table (see Fig. 10) included in the database 18 can be accessed from the portal site server 14.

The game server 16 also includes a known server computer system to provide the mobile phone 24 and the personal computer with games and other network services. The game server 16 is connected to a database 20 formed by a known hard disk memory device, and a point database (see Fig. 11) included in the database 20 can be accessed from the game server 16.

The personal computer 22 includes a known personal computer system configured to access the game server 16 through the communication network 12 to receive various image data and game programs using Hyper Text Transfer Protocol (HTTP), File Transfer Protocol (FTP), and the like.

The mobile phone 24 includes an input unit (such as dial buttons) and a display unit (such as a liquid crystal display device), and is especially provided with a data communication function in addition to a conversation function. The phone 24 can also access to the portal site server 14 through the mobile phone base station 26 and the communication network 12 to receive various image data and game programs using HTTP, its own protocol, and the like.

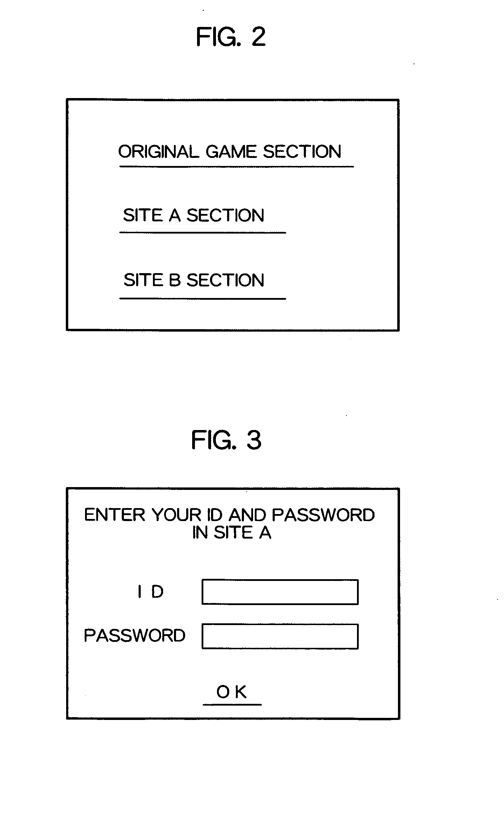

Fig. 2 shows an example of a service menu presented on the display unit of the mobile phone 24 when accessing the portal site server 14 from the phone. As shown, the portal site server 14 provides its original service ("Original Game Section"), and services ("Site A Section", and "Site B Section") aiming affiliation with other sites (such as the game server 16). When the game service (hereinafter referred to as an "affiliate game") aiming affiliation with another site (hereinafter referred to as an "affiliate site") such as "Site A Section" is selected from the menu with the mobile phone 24, an ID and password entry screen shown in Fig. 3 is returned to the portal site server 14. When a user enters the ID and password registered for the user in the affiliate site, the user is allowed to play a communication game using a CGI (common gateway interface) or download a game program, and accumulate points in the database 18 in accordance with the result of the game. The portal site server 14 desirably interrogates the game server 16 or the like, upon reception of the ID and the password entered on the ID and password entry screen in Fig. 3, as to whether or not the entered information is correct.

The network game system 10 is designed to allow a user to play a game in the portal site server 14, accumulate points, and use the points in the game server 16. More specifically, a user who has played a game with the mobile phone 24 can later access the game server 16 from the personal computer 22 at home or the like, and transfer the points accumulated in the database 18 to the database 20 connected to the game server 16.

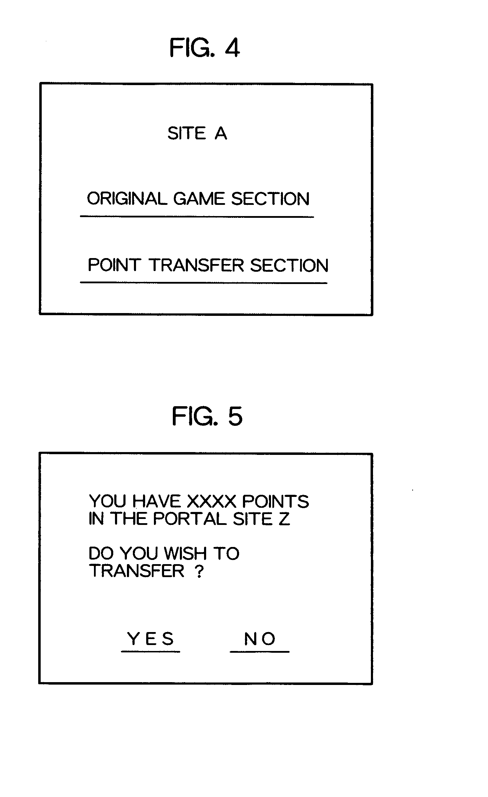

Fig. 4 shows an example of a service menu presented on a display provided for the personal computer 22 when accessing the game server 16 from the computer 22. As illustrated on the menu, the services provided by the game server 16 include, in addition to a service allowing a user to play its original games ("Original Game Section"), a service for transferring the points accumulated by the user in the portal site server 14 ("Point Transfer Section"). The user can play the original game provided by the game server 16 using the points they accumulated in the game server 16 or the portal site server 14.

Fig. 5 shows an example of a point balance confirmation screen presented on the display of the personal computer 22 when the user selects "Point Transfer Section" on the menu of Fig. 4. As illustrated in Fig. 5, when the user selects "Point Transfer Section", the balance of points he/she accumulated in the portal site server 14, and a link button used for choosing whether or not to transfer the point to the game server 16 are presented on the display of the personal computer 22. When the user wishes point transfer and selects the "Yes" button, the user's points stored in the database 18 are reduced to zero, and that points are added to the user's points stored in the database 20. When the user does not wish point transfer and selects the "No" button, the menu screen of, for example, Fig. 4 is displayed again.

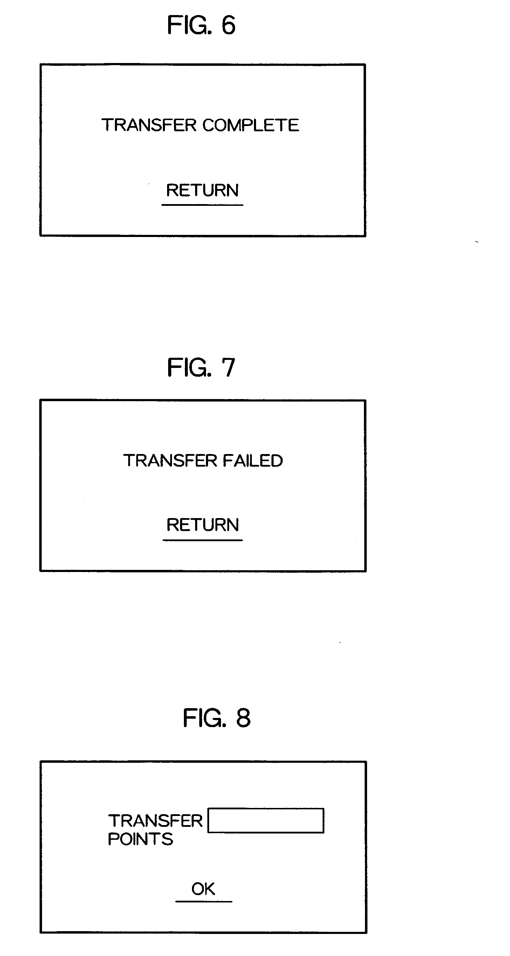

More specifically, for point transfer, the game server 16 sends a point transfer request to the portal site server 14. The portal site server 14 judges as to whether or not the points can be transferred. If the point transfer is approved, the server 14 reduces the point balance of the user to zero, and returns point transfer allowance data (data indicating that point transfer is allowed) to the game server 16. On the other hand, if the point transfer is not allowed, the server 14 returns point transfer rejection data (data indicating that point transfer is rejected) to the game server 16. Receiving the point transfer allowance data from the portal site server 14, the game server 16 adds the point balance stored in the database 18 to the point balance stored in the database 20 to update the point balance. The server 16 then transmits a transfer complete screen shown in Fig. 6 to the personal computer 22. On the other hand, if the point transfer rejection data is received from the portal site server 14, the server 16 transmits a transfer failure screen shown in Fig. 7 to the personal computer 22.

While all the points in the balance the user has accumulated in the database 18 are transferred to the database 20 in this example when the user selects the "Yes" button on the point balance confirmation screen shown in Fig. 5, a transfer point entry screen shown in Fig. 8 may be returned from the game server 16 when the "Yes" button is selected on the screen of Fig. 5, so that the user can specify the point to be transferred.

The contents stored in the databases 18 and 20 will next be described.

Fig. 9 illustrates a data configuration of a point database included in the database 18. As illustrated, the point database stores, in association with one another, a user ID of each user in the portal site server 14, an ID of the affiliate site where the user has played an affiliate game (game site ID), the balance of points the user has accumulated through the affiliate game, and a personal identification key (secret identification information) corresponding to the point balance. When the user enters an ID and a password on the ID and password entry screen shown in Fig. 3, and the entered ID and password are authorized, the portal site server 14 generates a new record including a user ID, a game site ID corresponding to the entry screen, the point balance of zero, and a personal identification key based on a random number, and registers the record in the point database. When the user plays an affiliate game, the corresponding point balance and personal identification key are updated based on the result.

Fig. 10 shows a data configuration of an ID matching table included in the database 18. As illustrated, the ID matching table stores, in a correlated manner, a user ID (e.g. "Z001") of each user in the portal site server 14, and a set of an ID (e.g. "Z01) of another site (e.g. the game server 16) and a user ID (e.g. "A087") in that site. When the user enters an ID and a password on the ID and password entry screen shown in Fig. 3, and the entered ID and password are authorized, a set of the game site ID corresponding to the entry screen and the user ID entered on the entry screen are additionally registered to the set of the site ID and user ID corresponding to the user ID in the portal site server 14 for that user. The portal site server 14 can obtain information through this table as to which user ID is assigned in a site to a user assigned with a certain ID in another site (such as the portal site server 14 and the game server 16).

Fig. 11 shows a data configuration of a point database included in the database 20. Referring to Fig. 11, the point database stores, in a correlated manner, a user ID assigned to a user in the game server 16 connected to the database 20, and the balance of points the user has accumulated. When a game is provided to a user, the game server 16 withdraws the point required for playing the game from the point balance corresponding to the user, and updates the point database.

Configurations of functions of the portal site server 14 and the game server 16 will be next described.

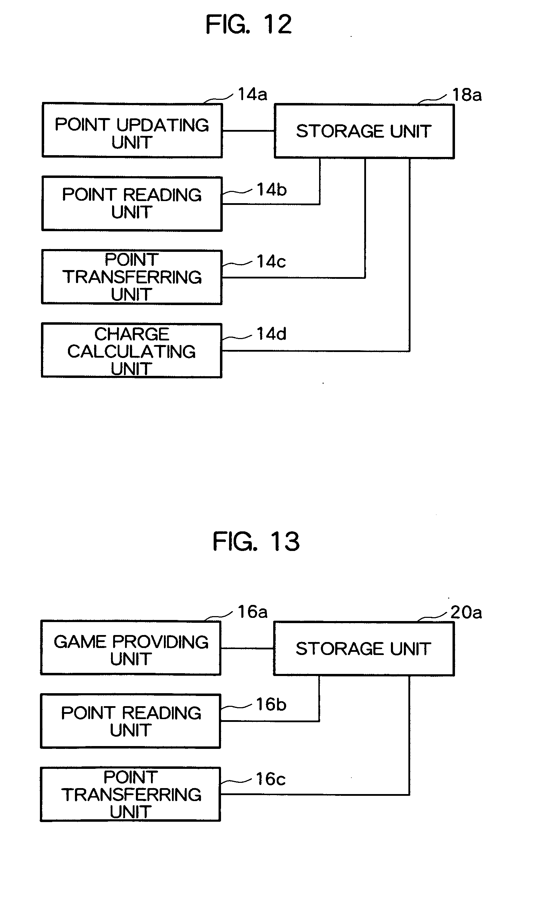

Fig. 12 is a block diagram illustrating a configuration of functions performed by the portal site server 14. Fig. 12 illustrates especially the functions related to the present invention among those achieved by the portal site server 14. As shown, the functions achieved by the portal site server 14 include a point updating unit 14a, a point reading unit 14b, a point transferring unit 14c, a charge calculating unit 14d, and a storage unit 18a. The point updating unit 14a, the point reading unit 14b, the point transferring unit 14c, and the charge calculating unit 14d are implemented by the portal site server 14 performing a program such as a CGI program.

The storage unit 18a includes the database 18, and stores the point database and the ID matching table described above.

The point updating unit 14a is a function of providing a game when accessed by a user from the mobile phone 24 or the like, giving points to the user in accordance with the result of the play (such as the score and play time), and updating the point balance stored in the point database included in the storage unit 18a in association with the user ID of the user and the game site ID corresponding to the game. The point updating unit 14a also updates the personal identification key corresponding to the point balance based on a random number when the point balance is updated.

Receiving a point balance inquiry request from the game server 16, the point reading unit 14b reads out the point balance and the personal identification key stored in the point database included in the storage unit 18a in association with the user ID included in the point balance inquiry request, and returns the readout data to the game server 16.

Receiving a point transfer request including a set of the site ID and the user ID and the personal identification key from the game server 16, the point transferring unit 14c checks the user ID in the portal site server 14 corresponding to the set of the site ID and the user ID, and compares the personal identification key stored in the point database included in the storage unit 18a in association with the user ID and the personal identification key included in the point transfer request. If the two keys match, the point balance corresponding to the identification key is updated to zero, and point transfer allowance data is returned. If the two keys do not match, point transfer rejection data is returned.

The charge calculating unit 14d is a function of calculating the charge to be paid by those involved in the portal site server 14 (such as administrators and providers of the service) to those involved in each game server 16 (such as administrators and providers of the service). The charge calculating unit 14d calculates the charge to be paid based on, for example, the number of records for each game site ID stored in the "game site ID" column, i.e. the number of users of the affiliate games, in the point database included in the storage unit 18a. The charge may be calculated based on the value of accumulated points corresponding to each game site ID earned by the user. Further, the charge may be calculated based on the number of times the point balance inquiry request or the point transfer request is transmitted from each game server 16 to the portal site server 14.

Fig. 13 is a block diagram illustrating a configuration of functions of the game server 16. The figure shows especially the functions related to the present invention among those implemented by the game server 16. As illustrated, the functions implemented by the game server 16 include a game providing unit 16a, a point reading unit 16b, a point transferring unit 16c, and a storage unit 20a. The game providing unit 16a, the point reading unit 16b, and the point transferring unit 16c are implemented by the game server 16 performing a program such as a CGI program.

The storage unit 20a includes the database 20, and stores the above-described point database.

The game providing unit 16a provides a user of the game server 16 with a game, or allows the user to download a game program using CGI. When a game service is provided to a user, the game providing unit 16a updates the point database included in the storage unit 20a by decreasing the point balance for the user in accordance with, for example, the contents of the play and the number of times the game is downloaded.

The point reading unit 16b is the function of, when a point balance inquiry request is transmitted from the personal computer 22 by a user, making an inquiry to the portal site server 14 about the point balance corresponding to the user and the game server 16, and returning the result included in a point balance display screen (Fig. 5).

The point transferring unit 16c is the function of requesting the portal site server 14 to transfer points corresponding to a user sending a point transfer request from the personal computer 22 and the game server 16, and updating the point database included in the storage unit 20a and returning a transfer complete screen if the transfer is allowed, or returning a transfer failure screen when the transfer is not allowed.

The processes performed by the portal site server 14 and the game server 16 will be described further in detail with reference to the flowcharts.

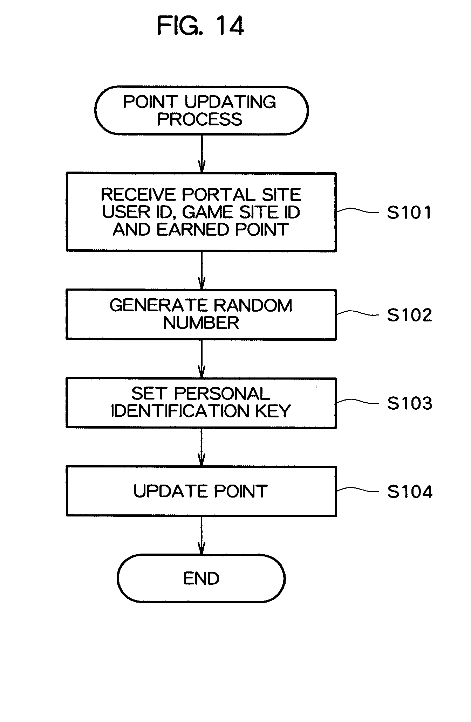

Fig. 14 is a flowchart of a point updating process performed by the point updating unit 14a implemented in the portal site server 14. According to the process shown in Fig. 14, the earned points, or basic information thereof, in accordance with the contents of the play (such as the number of play times and game scores) in the affiliate game and the number of times the game program is downloaded, the user ID assigned to the user in the portal site server 14 (the user ID within the portal site; hereinafter referred to as the "portal site user ID"), and the game site ID corresponding to that affiliate game are first received from the mobile phone 24 (S101). A random number is then generated (S102). A personal identification key is generated based on the random number, and written over the personal identification key stored in the point database corresponding to the portal site user ID and the game site ID received at the step S101, thereby updating the personal identification key (S103). Further, the earned point received at the step S101 (the earned point generated based on the basic information if the basic information is received) is added to the point balance stored in the point database in association with the portal site user ID and the game site ID received at the step S101, thereby updating the point balance (S104). Thus, the portal site server 14 updates the personal identification key corresponding to the point balance based on the random number when the point balance is updated.

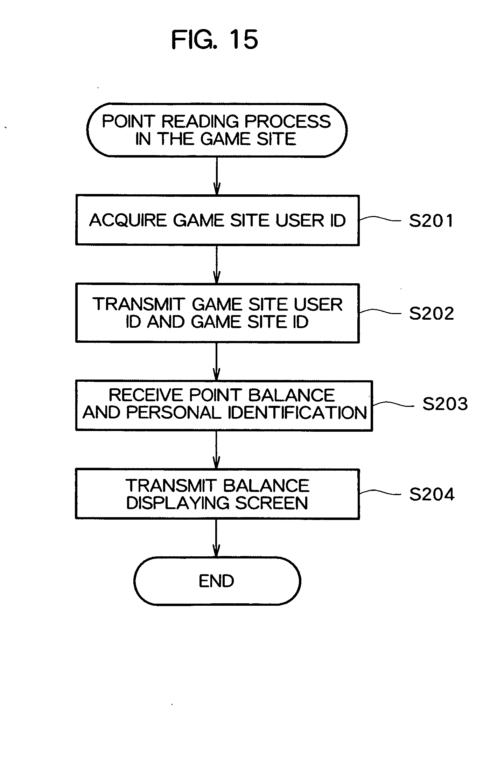

Fig. 15 is a flowchart of a point reading process performed by the point reading unit 16b implemented in the game server 16. The process shown in Fig. 15 is performed when, for example, a user selects "Point Transfer Section" on the menu illustrated in Fig. 4. In this process, a user ID in the game site 16, i.e. a game site user ID, is first acquired from the personal computer 22 (S201). For example, when the user ID already authorized is designed to be transmitted in the form of a cookie or the like to the game site 16 from the personal computer 22 upon user's selection of "Point Transfer Section" on the menu illustrated in Fig. 4, the point reading unit 16b is designed to acquire the user ID at the step S201. A point balance inquiry request including the game site user ID and the game site ID identifying the game server 16 is transmitted to the portal site server 14 (S202). The point balance and the personal identification key transmitted from the portal site server 14 in response to the request are received (S203). HTML (hypertext markup language) data (see Fig. 5) for presenting the point balance on the display of the personal computer 22 is returned (S204). Upon this transmission, a URL (uniform resource locator) of the game server 16 is associated with the "YES" button shown at the bottom of the screen, and the point balance and the identification key are set as arguments. It is desirable for data such as the point balance and the identification key is encrypted to be exchanged between the game server 16 and the portal site server 14.

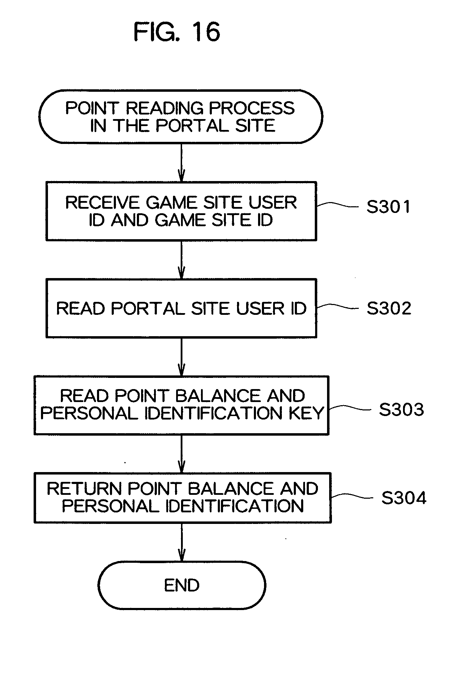

Fig. 16 is a flowchart showing a point reading process performed by the point reading unit 14b implemented in the portal site server 14. The process shown in Fig. 16 is performed when a point balance inquiry request is transmitted from the point reading unit 16b implemented in the game server 16. This process begins with acquisition of the game site user ID and the game site ID included in the point balance inquiry request received from the game server 16 (S301). Next, referring to the ID matching table included in the storage unit 18a, the portal site user ID corresponding to the set of the game site user ID and the game site ID acquired at the step S301 is read out (S302). The point balance and the personal identification key stored in association with the portal site user ID read at the step S302 and the game site ID acquired at the step S301 in the point database included in the storage unit 18a are read out (S303). The point balance and the personal identification key are returned to the game server 16 (S304).

Thus, the game server 16 transmits the point balance inquiry request specifying the user to the portal site server 14, and receives the point balance and the personal identification key corresponding to the user and the game server 16.

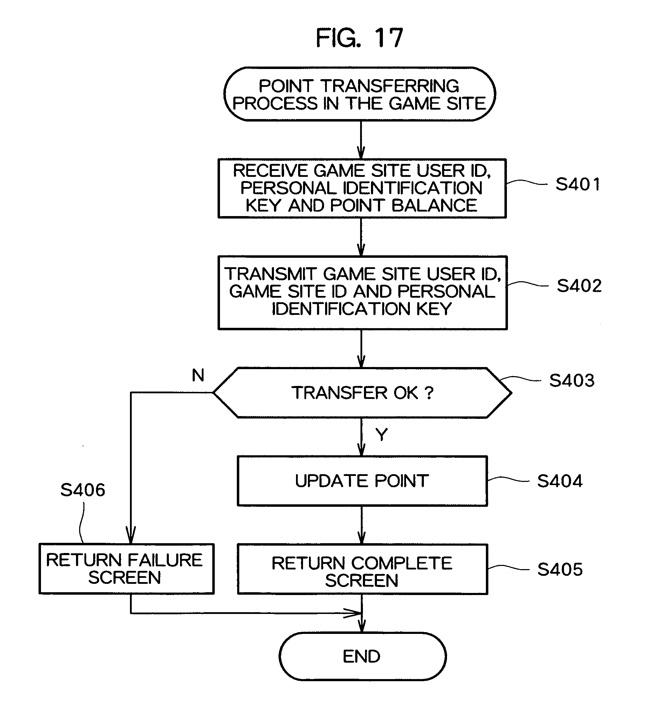

Fig. 17 is a flowchart of a point transfer process performed by the point transferring unit 16c implemented in the game server 16. The process illustrated in this figure is performed when a user selects the "YES" button on the point balance confirmation screen transmitted to the personal computer 22 from the game server 16 and wishes the point transfer. The process starts with reception of the game site user ID, the personal identification key, and the point balance from the personal computer 22 (S401). As described above, the "YES" button displayed at the bottom of the point balance confirmation screen is associated with the URL of the game server 16, and the point balance and the personal identification key are set as the arguments, so that the point balance and the personal identification key can be acquired at the game server 16 by referring to the arguments of the URL received from the personal computer 22. The game site user ID may be acquired, for example, in the form of a cookie. Note that data may be exchanged in any form other than those described above between the personal computer 22 and the game server 16.

The game server 16 then transmits a point transfer request including the game site user ID and the personal identification key acquired at the step S401 to the portal site server 14, and the game site ID of the game server 16 (S402), and determines whether or not the point can be transferred based on whether or not the point transfer allowance data is received (S403). If the point transfer allowance data is received from the portal site server 14, the point balance acquired at the step S401 is added to the point balance stored in the point database included in the storage unit 20a in association with the game site user ID acquired at the step S401 (S404), and the point transfer complete screen is returned to the personal computer 22 (S405). On the other hand, if the point transfer allowance data is not received from the portal site server 14, i.e. the point transfer rejection data is received, a transfer failure screen is returned to the personal computer 22 (S406). The point balance is not updated in this case.

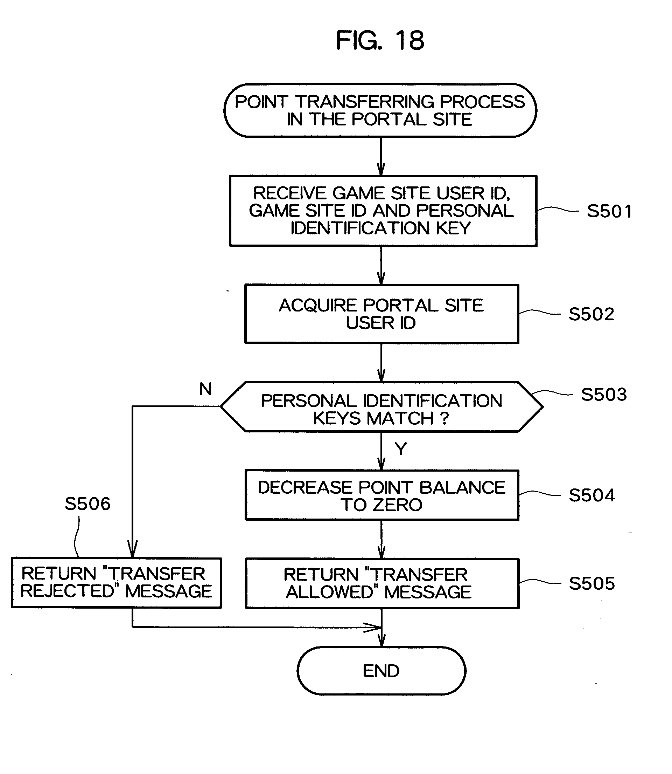

Fig. 18 is a flowchart of a point transfer process performed by the point transferring unit 14c implemented in the portal site server 14. The process shown in this figure is performed when the point transfer request is transmitted from the point transferring unit 16c implemented in the game server 16. In the beginning of the process, the game site user ID, the game site ID, and the personal identification key are received from the game server 16 (S501). By referring to the ID matching table included in the storage unit 18c, the portal site user ID corresponding to the set of the game site user ID and the game site ID received at the step S501 is read out (S502). Further, by referring to the point database included in the storage unit 18c, determination is made as to whether or not the personal identification key received at the step S501 matches the personal identification key stored in the point database in association with the portal site user ID read out at the step S502 and the game site ID received at the step S501 (S503). If the two keys match, the point balance stored in the point database in association with the portal site user ID read out at the step S502 and the game site ID received at the step S501 is updated to zero (S504), and the point transfer allowance data is returned to the game server 16 (S505). If the two keys do not match, the point balance is not updated, and the point transfer rejection data is returned to the game server 16 (S506).

As described above, according to the present network game system 10, the point related to the service provided by the portal site server 14 can be transferred to the point related to the service provided by each game server 16. For such transfer, when the point balance corresponding to the user and the site is updated, the personal identification key corresponding to the point balance is also updated in the portal site server 14. Further, the point balance and the personal identification key are returned in response to the point balance inquiry request from the game server 16, which is designed to transmit the point transfer request including the personal identification key. If the personal identification key matches the personal identification key stored in the database, the point transfer allowance data is returned. As a result, the point cannot be transferred unless the latest point balance is inquired and the point transfer request is made before the point balance is updated. The point transfer can thus be safely performed.

The present invention is not limited to the above-described embodiment. For example, while the service provided by the portal site server 14 is received by the mobile phone 24 and the service provided by the game server 16 is received by the personal computer 22 in the above description, the service provided by the portal site server 14 can be received by the personal computer 22 or other terminals such as personal digital assistants, home-use game machines, and handheld game machines. Similarly, the service provided by the game server 16 can be received by the mobile phone 24 or other terminals such as personal digital assistants, home-use game machines, and handheld game machines.

### INDUSTRIAL APPLICABILITY

The present invention is applicable to a network computer system so as to implement a system for transferring points related to one service to points related to another service.

## Claims

1. A network service system for providing a user with first and second services, comprising:
a first server for providing the first service;
a first database connected to the first server for storing point information in association with user identifying information related to the user in the first server;
a second server for providing the second service; and
a second database connected to the second server for storing point information in association with user identifying information related to the user in the second server; wherein
the first server includes point offering means for updating the point information stored in the first database in association with the user identifying information related to the user so as to offer points to the user,
the second server includes point consuming means for updating the point information stored in the second database in association with the user identifying information related to the user so as to consume the point of the user when the second service is provided to the user, and
the network service system further comprises point transferring means for updating the point information stored in the second database in association with the user identifying information related to the user in the second server based on the point information stored in the first database in association with the user identifying information related to the user in the first server.

2. A network service system according to claim 1, wherein at least one of the first and second services is a service for allowing the user to play a game.

3. A network service system according to any one of claims 1 or 2, further comprising
charge amount calculating means for calculating an amount of money to be paid from a person involved in the first server to a person involved in the second server.

4. A network service system according to claim 3, wherein
the charge amount calculating means includes means for counting the number of users, and calculates the amount based on the number of users.

5. A network service system according to any one of claims 3 or 4, wherein
the charge amount calculating means calculates the amount based on the content stored in the first database.

6. A network service system according to any one of claims 3-5, wherein
the charge amount calculating means calculates the amount based on the number of times access of a predetermined type is made from the second server to the first server.

7. A network service system according to any one of claims 1-6, wherein
the point transferring means includes:
secret identification information updating means provided in the first server for updating secret identification information stored in the first database in association with the point information when the point information stored in the first database is updated,
point inquiry request receiving means provided in the first server for receiving a point inquiry request from the second server,
point information and secret identification information returning means provided in the first server for returning the point information and the secret identification information stored in the first database when the point inquiry request is received by the point inquiry request receiving means,
point transfer request receiving means provided in the first server for receiving a point transfer request including secret identification information from the second server,
first point transferring means provided in the first server for updating the point information stored in the first database to decrease a point balance and returning point transfer allowance data to the second server when the secret identification information included in the point transfer request received by the point transfer request receiving means matches the secret identification information stored in the first database, and
second point transferring means provided in the second server for updating the point information stored in the second database to increase a point balance when the point transfer allowance data is returned from the first server by the first point transferring means.

8. A point transfer system including first and second databases, each storing point information, comprising:
point information updating means for updating the point information stored in the first database;
secret identification information updating means for updating secret identification information stored in the first database in association with the point information when the point information stored in the first database is updated by the point information updating means;
point inquiry request receiving means for receiving a point inquiry request;
point information and secret identification information returning means for returning the point information and the secret identification information stored in the first database when the point inquiry request is received by the point inquiry request receiving means;
point transfer request receiving means for receiving a point transfer request including secret identification information ;
first point transferring means for updating the point information stored in the first database to decrease a point balance and returning point transfer allowance data when the secret identification information included in the point transfer request received by the point transfer request receiving means matches the secret identification information stored in the first database; and
second point transferring means for updating the point information stored in the second database to increase a point balance when the point transfer allowance data is returned by the first point transferring means.

9. A point transfer system according to claim 8, wherein
the secret identification information updating means updates the secret identification information based on a random number.

10. A point management device, comprising:
point information updating means for updating point information stored in a database;
secret identification information updating means for updating secret identification information stored in the database in association with the point information when the point information stored in the database is updated by the point information updating means;
point inquiry request receiving means for receiving a point inquiry request;
point information and secret identification information returning means for returning the secret identification information and the point information stored in the database when the point inquiry request is received by the point inquiry request receiving means;
point transfer request receiving means for receiving a point transfer request including secret identification information ; and
point transferring means for updating the point information stored in the database to decrease a point balance and returning point transfer allowance data when the secret identification information included in the point transfer request received by the point transfer request receiving means matches the secret identification information stored in the database.

11. A point management method, comprising:
a point information updating step for updating point information stored in a database;
a secret identification information updating step for updating secret identification information stored in the database in association with the point information when the point information stored in the database is updated at the point information updating step;
a point inquiry request receiving step for receiving a point inquiry request;
a point information and secret identification information returning step for returning the secret identification information and the point information stored in the database when the point inquiry request is received at the point inquiry request receiving step;
a point transfer request receiving step for receiving a point transfer request including secret identification information ; and
a point transferring step for updating the point information stored in the database to decrease a point balance and returning point transfer allowance data when the secret identification information included in the point transfer request received at the point transfer request receiving step matches the secret identification information stored in the database.

12. A network game system, comprising:
a first game server;
a first database connected to the first game server for storing point information related to a game and secret identification information ;
a second game server; and
a second database connected to the second game server for storing point information related to a game; wherein
the first game server includes
point information updating means for updating the point information stored in the first database,
secret identification information updating means for updating the secret identification information stored in the first database in association with the point information when the point information stored in the first database is updated by the point information updating means,
point inquiry request receiving means for receiving a point inquiry request from the second game server,
point information and secret identification information returning means for returning the secret identification information and the point information stored in the first database when the point inquiry request is received by the point inquiry request receiving means,
point transfer request receiving means for receiving a point transfer request including secret identification information from the second game server, and
first point transferring means for updating the point information stored in the first database to decrease a point balance and returning point transfer allowance data to the second game server when the secret identification information included in the point transfer request received by the point transfer request receiving means matches the secret identification information stored in the first database, and
the second game server includes
second point transferring means for updating the point information stored in the second database to increase a point balance when the point transfer allowance data is returned from the second game server by the first point transferring means.
